(19)

Europäisches
Patentamt
European
Patent Office
Office européen
des brevets

(11) **EP 2 393 213 A1**

(12) **EUROPEAN PATENT APPLICATION**

(43) Date of publication:
**07.12.2011 Bulletin 2011/49**

(51) Int Cl.:
***H04B 3/54*** (2006.01)

(21) Application number: **11004447.6**

(22) Date of filing: **31.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.06.2010 JP 2010127296**

(71) Applicant: **Sharp Kabushiki Kaisha Osaka-shi, Osaka 545-8522 (JP)**

(72) Inventors:
• **Nakai, Kazuhiro**
  **Osaka-shi**
  **Osaka 545-8522 (JP)**
• **Kawabe, Takahiro**
  **Osaka-shi,**
  **Osaka 545-8522 (JP)**

(74) Representative: **Müller - Hoffmann & Partner Patentanwälte**
**Innere Wiener Straße 17**
**81667 München (DE)**

(54) **Power line communication adaptor**

(57)  A technique capable of recognizing a usage state of a power of a user, curbing additionally needed power consumption is provided. Scanning bit stream data containing information regarding scan frequencies and an initial-stage power of each of the frequencies is outputted from an output part (34), decomposed into data of respective scan frequencies, transformed to time series digital data in an IFFT module (19), transformed to scanning analog data by D/A transform in an AFE (11), and transmitted to a power line (10). Reflected analog data received from the power line (10) is transformed by A/D transform in the AFE (11), transformed to frequency series reflected spectrum data in the FFT module (14), and sent to a check part (31). The check part (31) checks combination of attenuation rates of respective scan frequencies against registered pattern data registered in a pattern correspondence relationship storage part (32), and outputs a related connection state of an outlet as a checked result.

Fig. 2

EP 2 393 213 A1

**Description**

BACKGROUND OF THE INVENTION

1. Field of the Invention

The present invention relates to an indoor line terminal state determination apparatus, and a PLC adaptor having a function to determine an indoor line terminal state.

2. Description of the Related Art

A power line communication (PLC) is a technique using an indoor power line such as a lamp line as a communication line, and it attracts attention and its technical development has been promoted because it is not necessary to newly lay a communication line, and communication cost can be low.

For example, Japanese Unexamined Patent Publication No. 2007-318229 discloses a power line measurement apparatus which provides information to determine an appropriate usable band of a modem based on a S/N value of an indoor power line, in setting a repeater and the modem used in the PLC. More specifically, a power line to be measured is connected a part between an oscillation part and a measurement part, an orthogonal frequency division multiplexing (OFDM) signal is transmitted from the oscillation part to the indoor power line, and the usable band of the modem is calculated based on the S/N value of the OFDM signal received from the measurement part, whereby transmission characteristics and a usable transmission rate can be measured without being subjected to the restriction of a measurement range.

By the way, a HEMS (Home Energy Management System) has been recently advocated in order to save energy in a civilian sector, with a view to improving environmental consciousness. The HEMS saves energy by effectively controlling an operation of an apparatus such as an electric appliance with the aid of the information technology, and accordingly there are many advocated systems to enhance energy consumption consciousness by displaying a household energy consumption situation, or to forcibly curb energy consumption by controlling an operation of an electric device.

The HEMS supposes that in order to control the operations of the electric devices, the electric devices are connected through a communication line to monitor or detect their operation states. However, in order to monitor or detect the operation state of the electric device, it is necessary for each device to individually transmit a signal about its operation state at the present moment to the host side. Consequently, as the number of the devices increases, the signal is more frequently exchanged between each device and a host, so that electric energy required for the communication increases, and there is a worry that it moves backward in view of the energy saving.

SUMMARY OF THE INVENTION

The present invention was made in view of the above problems and it is an object to provide a technique capable of recognizing a usage state of a power of a user while curving additionally needed power consumption, by use of a technique of the PLC.

In order to solve the above problem, an indoor line terminal state determination apparatus according to the present invention is provided to automatically determine whether an outlet set to connect an indoor power line to an electric device is in an open state or in a state connected to the device, and includes a scanning bit stream data output part configured to output scanning bit stream data containing information regarding a plurality of scan frequencies and information regarding an initial-stage power of each of the scan frequencies, a pattern correspondence relationship storage part configured to store registered pattern data provided in such a manner that information regarding an attenuation rate of each of the scan frequencies or information capable of calculating the attenuation rate is related to a connection state of each outlet set on the indoor power line, and a check part configured to recognize a power of each of the scan frequencies from inputted frequency series reflected spectrum data, calculate the attenuation rate of each of the scanning frequencies from the initial-stage power, retrieve the registered pattern data having the same attenuation rate of each of the scanning frequencies or almost the same attenuation rate thereof within an error range, from the pattern correspondence relationship storage part, and output the connection state of the outlet related to the retrieved registered pattern data, as a check result when the retrieving can be successfully performed, in which, in a PLC adaptor, the scanning bit stream data is decomposed into data according to the number of the scan frequencies and transformed to time series digital data by inverse Fourier transform, the time series digital data is transformed to scanning analog data by D/A transform, and the scanning analog data is transmitted to the indoor power line, and, in the same or different PLC adaptor, reflected analog data is received from the indoor power line and transformed to digital data by A/D transform and Fourier transform to generate the reflected spectrum data.

In addition to the above characteristics, the indoor line terminal state determination apparatus according to the present invention is provided such that the pattern correspondence relationship storage part stores the state of each outlet as probability information, based on combination of the attenuation rates of respective scan frequencies, and the check part checks the combination of the attenuation rates of the respective scan frequencies calculated from the reflected spectrum data against the information stored in the pattern correspondence relationship storage part, and outputs the state of the outlet having the highest probability information with respect to each outlet, as a checked result.

In addition to the above characteristics, the indoor line terminal state determination apparatus according to the present invention is provided such that when the check part cannot retrieve the registered pattern data determined to have the same attenuation rate of each of the scan frequencies or almost the same one within the error range, the check part outputs information requiring an input of information regarding the connection state of each outlet at the present moment.

In addition to the above characteristics, the indoor line terminal state determination apparatus according to the present invention is provided such that when there is an outlet about which the check part cannot retrieve the registered pattern data determined to have the same attenuation rate of each of the scan frequencies or almost the same one within the error range, the check part outputs information requiring an input of information regarding a connection state of the outlet.

In addition to the above characteristics, the indoor line terminal state determination apparatus according to the present invention is provided such that it has a terminal state input reception part configured to receive an external input of information regarding a connection state of an outlet, the terminal state input reception part outputs the inputted information regarding connection states of one or more outlets to the pattern correspondence relationship storage part, and the pattern correspondence relationship storage part relates the combination of the attenuation rates of respective scan frequencies calculated by the check part just before, to the connection state of the outlet applied from the terminal state input reception part, and stores the relationship as the new registered pattern data.

A PLC adaptor according to the present invention includes the indoor line terminal state determination apparatus according to any one of above described, an encoder configured to decompose digital data containing information regarding frequencies and information regarding a power of each of the frequencies into signals of the respective frequencies, an inverse Fourier transform module configured to superimpose the digital data of the respective frequencies generated by the encoder and transform the superimposed digital data to time series digital data, an analog front end configured to transform the time series digital data to transformed analog data by D/A transform, transmit the transformed analog data to the indoor power line, and transform the analog data received from the indoor power line to transformed digital data by A/D transform, and a Fourier transform module configured to transform the transformed time series digital data outputted from the analog front end to frequency series digital data, in which when the scanning bit stream data output part outputs the scanning bit stream data, the encoder decomposes the scanning bit stream data into the signals of the respective frequencies, the inverse Fourier transform module transforms the signals of the respective frequencies to the time series digital data, and the analog front end transforms the time series digital data to the scanning analog data and transmits the scanning analog data to the indoor power line, and after that, when the analog front end receives the reflected analog data from the indoor power line and transforms the reflected analog data to digital data, the Fourier transform module transforms the digital data to the reflected spectrum data serving as the frequency series digital data and applies the reflected spectrum data to the check part, and the check part performs a checking process.

A method for determining an indoor line terminal state according to the present invention includes connecting a plurality of the PLC adaptors having the above characteristics to the indoor power line, transmitting the scanning analog data from one PLC adaptor, and receiving the reflected analog data by another PLC adaptor, generating the reflected spectrum data based on the reflected analog data, and performing a checking process in the check part.

According to the configuration of the indoor line terminal state determination apparatus, the scanning bit stream data output part only has to be provided with the function to generate the predetermined bit stream data and output (transmit) it, the pattern correspondence relationship storage part only has to be provided with the function to store the information, and the check part only has to be provided with the arithmetic operation function to check the given data against the data stored in the pattern correspondence relationship storage part. That is, as long as the normal PLC adaptor exists, only the normal microcomputer is needed as additionally needed hardware. Naturally, the microcomputer can be provided in the PLC adaptor. In this case, the PLC adaptor has a function to determine an indoor line terminal state.

The bit stream data is decomposed into the data according to the number of the scan frequencies, and superimposed to each other, whereby the frequency series digital data is provided. Thus, the data is transformed to the time series digital data by the inverse Fourier transform, and transformed to the analog data (scanning analog data) by the D/A transform.

When this scanning analog data is transmitted to the indoor power line, the state of the analog data reflected from the terminal (reflected analog data) changes based on the state of each outlet. The reflected analog data is transformed to the frequency series digital data (reflected spectrum data) by the A/D transform and the Fourier transform. Thus, it is recognized how much the power of each scan frequency has changed since it was transmitted.

The pattern correspondence relationship storage part stores the data provided by relating the connection state of the outlet to the attenuation rate of each scan frequency. Thus, the check part detects the attenuation rate of each scan frequency from the reflected spectrum data, and retrieves the same combination as the combination of the attenuation rates, from the pattern correspondence relationship storage part. When the combination is successfully retrieved, it can be recognized that the connection state (terminal state) of the outlet related to the combination is the terminal state at the present moment.

In addition, to detect the terminal state, the transmission adaptor (detection apparatus) and the reception adaptor (detection apparatus) may be the same apparatus or separated apparatuses. When the transmission and reception adaptor (apparatus) is the same apparatus, it is difficult to correctly receive the reflected analog data before the output (transmission process) of the scanning analog data is completed, but when they are separated, the reflected analog data can be received before the scanning analog data is completely outputted, so that a time required to determine the terminal state can be shortened, and the determination precision can be improved.

BRIEF DESCRIPTION OF THE DRAWINGS

Fig. 1 is a schematic view of an indoor line connected to a PLC adaptor;
Fig. 2 is a block diagram showing a schematic configuration of the PLC adaptor of the present invention;
Fig. 3 is a graph showing an image of registered pattern data; and
Fig. 4 is a block diagram showing a schematic configuration in a case where the indoor line terminal state determination apparatus of the present invention is provided outside the PLC adaptor.

DESCRIPTION OF THE PREFERRED EMBODIMENTS

In this specification, a line (indoor power line) provided to distribute a power to each position in a house is simply referred to as the "power line".

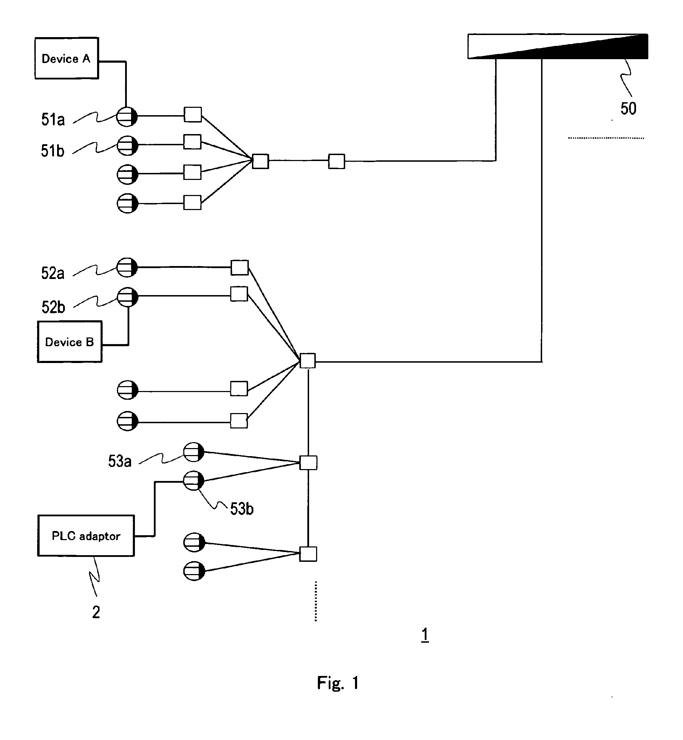

Fig. 1 schematically shows a usage situation of a PLC adaptor of the present invention. A power is supplied from a distribution board 50 to an outlet arranged in each position in a house 1, and when an electric device is connected to the outlet, the power is supplied to the electric device.

The "outlet" used here is a connection device to electrically connect the power line serving as the indoor line, to the electric device.

When connected to the outlet, a PLC adaptor 2 obtains a power supply voltage from the power line, and transmits and receives communication information through the power line. In addition, it is equipped with a LAN interface (not shown), and connected to the device using the LAN through a LAN line. For example, the PLC adaptor 2 is provided in each room, and when the PLC adaptor is connected to the device through the LAN line in each room, the devices existing in the different rooms are connected through the LAN (through the power line). Thus, each device can be remotely controlled or operation state of the device can be monitored by a computer connected to the LAN.

The distribution board 50, and many outlets 51a, 51b, 52a, 52b, 53a, 53b, ⋯ are provided in the house 1. Fig. 1 shows that a device A, a device B, and the PLC adaptor 2 are connected to the outlets 51a, 52b, and 53b, respectively.

As described above, the PLC adaptor is originally used to connect devices through the LAN line and connect the devices to the LAN. Therefore, in a case where the several devices provided in the distant rooms are connected through the LAN, the several PLC adaptors are inevitably needed.

However, the present invention intends to determine a usage state of each outlet (terminal state of the indoor line), using a function with which the PLC adaptor is usually provided, which is different from the original usage purpose of the PLC adaptor to connect each device to the LAN as described above. Thus, when the PLC adaptor is used for the purpose of the present invention to realize its function (hereinafter, referred to as the "function of the present invention", the several PLC adaptors are not necessarily provided. However, the effect is improved in some cases when the several PLC adaptors are provided as will be described below.

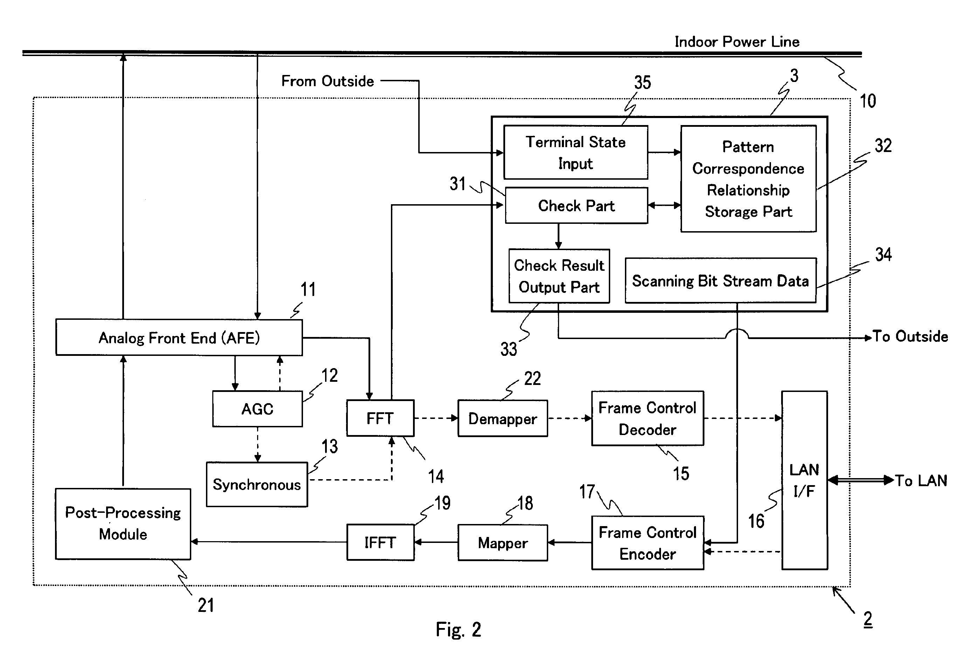

Hereinafter, operation contents of the PLC adaptor in the present invention will be described with reference to a block diagram in Fig. 2.

Fig. 2 is a block diagram schematically showing a general configuration of the PLC adaptor 2. The PLC adaptor 2 is equipped with, similar to the general PLC adaptor, an analog front end (AFE) 11, an automatic gain controller (AGC) 12, a synchronous module 13, a FFT (Fourier transform) module 14, a frame control decoder 15, a LAN interface 16, a frame control encoder 17, a constellation mapper 18, an IFFT (inverse Fourier transform) module 19, a post-processing module 21, and a constellation demapper 22. In addition, the PLC adaptor 2 is equipped with a terminal state determination unit 3 to achieve the object of the present invention.

The AFE 11 is equipped with an A/D converter and a D/A converter, so that it transforms analog data given from a power line 10 to digital data and outputs it to the FFT module 14, while transforms digital data given from the post-processing module 21 to analog data and transmits it to the power line 10.

The AGC 12, the synchronous module 13, the FFT module 14, the frame control decoder 15, the frame control encoder 17, the constellation mapper 18, the IFFT module 19, the post-processing module 21, and the constellation demapper 22 are a software process block to perform various kinds of arithmetic operations on digital data applied from the LAN line through the LAN interface 16, or on digital data applied from the AFE 11. This software process block performs the arithmetic operation with a CPU and a memory (not shown) which are provided as hardware in the PLC adaptor 2.

When the PLC adaptor 2 is used for its original purpose, the LAN interface 16 connects the PLC adaptor 2 to an external device through the LAN line so that a signal can be exchanged between them.

The terminal state determination unit 3 is a specific software process block provided to realize the function of the present invention. It will be described below.

First, a brief description will be made of a procedure of a signal process when the PLC adaptor 2 is used normally.

The digital data inputted from the LAN line to the LAN interface 16 is subjected to processes such as scrambling, error correction encoding, and interleaving and then divided into parallel data according to the number (N) of subcarriers in the frame control encoder 17.

The parallel data are mapped in the constellation mapper 18 on a complex plane (I-Q plane) with respect to each subcarrier, according to a modulation method to be used. For example, in a case of 64 QAM, data is extracted with respect to each 6 bits, and mapped at one point among 64 points on the complex plane.

While the subcarriers have different frequencies, they have orthogonal properties, so that their frequency bands can be separated even when superimposed to each other. A basic signal A(t) is defined by a following formula 1.

$$A(t) = a_n \cdot \cos(2\pi n f_0 t) - b_n \cdot \sin(2\pi n f_0 t)$$

$$= \sqrt{a_n^2 + b_n^2} \cos(2\pi n f_0 t + \phi_n) \qquad \left( \phi_n = \tan^{-1} \frac{b_n}{a_n} \right)$$

$$(1)$$

In addition, in the above formula (1), a frequency of each subcarrier is $nf_0$, and a symbol length T is equal to $1/f_0$. That is, when n is set to different values such as 1, 2, ⋯ , the frequency of each subcarrier can be differentiated.

In addition, a transmission signal s(t) is expressed by a following formula 2, so that it can be separated to a carrier component and a modulation component as shown in a formula 3.

$$s(t) = \cos(2\pi \cdot f_c \cdot t + \theta_k)$$

$$= \cos\theta_k \cdot \cos(2\pi \cdot f_c \cdot t) - \sin\theta_k \cdot \sin(2\pi \cdot f_c \cdot t)$$

$$= \mathrm{Re}\left[ (a_k + jb_k)e^{j2\pi \cdot f_c \cdot t} \right] \qquad (a_k = \cos\theta_k, \ b_k = \sin\theta_k)$$

$$(2)$$

$$e^{j2\pi \cdot f_c \cdot t} : \ \text{Carrier component}$$

$$(a_k + jb_k) : \ \text{Digital modulation component}$$

$$(3)$$

That is, the modulation component can be expressed by a complex number composed of a real part and an imaginary part as shown in the formula 3, so that values $a_k$ and $b_k$ can be determined with respect to each subcarrier by the complex number shown at the complex plane position which has been mapped by the constellation mapper 18 with respect to each subcarrier.

The IFFT module 19 generates a base band OFDM signal shown by a following formula 4 by adding signal waveforms of the subcarriers each determined based on the values $a_k$ and $b_k$ determined by the constellation mapper 18, at the same timing under the condition that the carrier frequencies of the subcarriers are each differentiated. Thus, frequency series digital data is transformed to time series digital data.

$$s_B(t) = \sum_{n=0}^{N-1} \{a_n \cos(2\pi n f_0 t) - b_n \sin(2\pi n f_0 t)\}$$

In addition, in an actual arithmetic operation, a baseband OFDM signal $s_B$ (t) may be calculated in such a manner that a complex data symbol $d_k$ (= $a_k$ + $jb_k$) expressed by the values $a_k$ and $b_k$ (k = 0, 1, 2, $\cdots$, N-1) determined with respect to each of the N subcarriers is defined, this is subjected to inverse discrete Fourier transform (IDFT) and transformed to serial signals, and the real part of a signal u (t) obtained by the above process is taken.

The baseband OFDM signal generated by the IFFT module 19 is subjected to the various kinds of processes such as preamble addition used in the synchronous process on the reception side, guard interval addition to avoid interference between the symbols, filtering by a time window, and limiter process to remove a part in which an instantaneous power of the signal is at a certain level or more.

Thus, the signal is transformed to the analog data (D/A transform) in the AFE 11, and if needed, its frequency is transformed to a frequency required for the transmission or its intensity is adjusted, and then outputted to the power line 10.

At the time of reception, processes opposite to the processes at the time of transmission described above are performed. That is, when the AFE 11 receives a transmission signal from the power line 10, the AFE 11 transforms its frequency and adjusts its intensity, transforms the transmission signal to digital data, and applies sample signal data and timing information, to the FFT module 14 in corporation with the AGC 12 and the synchronous module 13.

The FFT module 14 transforms time series digital data to frequency series digital data and applies it to the constellation demapper 22. In an actual arithmetic, the discrete Fourier transform (DFT) may be performed. The constellation demapper 22 performs demapping with respect to each subcarrier according to the modulation method used, and obtains parallel data with respect to each subcarrier. The frame control decoder 15 transforms the N parallel data to serial data and if needed, performs processes such as descrambling and deinterleaving, and applies it to the LAN interface 16. The LAN interface 16 transforms it into a form transmittable through the LAN line, and outputs it to the LAN line.

Through the above series of processes, the devices connected to the PLC adaptors 2 through the LAN line can communicate with each other through the power line 10.

Next, a description will be made of an operation process when the function of the present invention is realized using the PLC adaptor 2.

As shown in Fig. 2, the PLC adaptor 2 is equipped with the terminal state determination unit 3 (terminal state determination apparatus 3) to realize the function of the present invention.

The terminal state determination unit 3 is equipped with a check part 31, a pattern correspondence relationship storage part 32, a check result output part 33, a scanning bit stream data output part 34, and a terminal state input reception part 35. The check part 31 is a software process block to check the frequency series digital data applied from the FFT module 14 against data stored in the pattern correspondence relationship storage part 32 and determine an outlet state in the house 1. The pattern correspondence relationship storage part 32 is a memory part to store predetermined data which will be described below. The check result output part 33 and the scanning bit stream data output part 34 are interfaces to output the predetermined data, and the terminal state input reception part 35 is an interface to receive an input of the predetermined data. That is, the terminal state determination unit 3 is realized with the CPU, the memory, and the input/output interface of the signal as hardware, and specific hardware is not additionally needed in the hardware equipped with the general PLC adaptor.

Under the condition that the PLC adaptor 2 is connected to the outlet, the terminal state determination unit 3 serves as a function block to determine the terminal states of the power line connected to the above outlet and the other power line connected directly or indirectly to the above power line through the distribution board. For example, referring to Fig. 1 again, it can detect information about whether the outlets 51a, 51b, 52a, 52b, 53a, and 53b are open or connected to the device, and information about whether the connected device is operated or not. Hereinafter, the state of the outlet is referred to as the "terminal state".

To detect the terminal state, the scanning bit stream data output part 34 outputs predetermined scanning bit stream data. The bit stream data contains information regarding a plurality of carrier frequencies (hereinafter, referred to as the "scan frequency") and information regarding a size of each scan frequency (hereinafter, referred to as the "initial-stage power").

After the scanning bit stream data has been divided into parallel data according to the number of the subcarriers (that is, the number of kinds of the scan frequencies) in the frame control encoder 17, the mapping is performed on the complex plane (I-Q plane) in the constellation mapper 18, based on the information regarding the initial-stage power with respect to each scan frequency, whereby the modulation component described in the formula 3 is established.

Here, the number of the scan frequencies is selected from the carrier frequencies which can be used as the subcarriers, based on the number of the outlets whose terminal state is to be determined. For example, when the number of the outlets is ten, the carrier frequencies can be 2, 5, 8, 11, 14, 17, 20, 23, 26, and 30 MHz.

The IFFT module 19 transforms the frequency series digital data to the time series digital data by adding the signal waveforms established by the carrier frequencies (scan frequencies) of the subcarriers and the modulation components of the respective scan frequencies at the same timing. At this time, the inverse discrete Fourier transform (IDFT) may be performed as described above. Since the baseband frequency shown in the formula 4 has the orthogonal properties, they can be extracted even when the frequency components are mixed.

After the post-processing has been performed in the post-process module 21, the data is transformed to the analog data (hereinafter, referred to as the "scanning analog data) in the AFE 11 and transmitted to the power line 10.

The scanning analog data outputted to the power line 10 is supplied to the terminal of the power line 10 directly connected to the PLC adaptor 2, the terminal of another power line directly connected to the above power line, and the terminal of the other power line indirectly connected thereto through the distribution board 50. Thus, when the data reaches each terminal, it is reflected and its reflected wave reversely flows. The reflected wave changes its state based on the state of each terminal. That is, based on situations such as whether or not the outlet is in the open state, what kind of device is connected, and whether the connected device is operated or not, the reflected wave changes its state. That is, the state of each terminal is reflected in the reflected wave.

When the reflected wave flowing in the one power line intersects with the reflected wave flowing in the other power line, its signal level is changed. In this case also, the frequency components do not interfere with each other because they have the orthogonal properties. Thus, when the reflected wave (hereinafter, referred to as the "reflected analog data") flows in the power line 10 to which the PLC adaptor 2 is directly connected, the AFE 11 of the PLC adaptor 2 transforms the reflected analog data to digital data and outputs it to the FFT module 14.

When the PLC adaptor 2 is used as the normal information exchange function, as described above, the signal of the data obtained through the power line 10 is transformed by the AFE 11 in corporation with the AGC 12 and the synchronous module 13 while the gain is kept constant. Meanwhile, when the function of the present invention is realized, the A/D transform is performed without performing gain control, and the obtained digital data is supplied to the FFT module 14. This is because the size of the scan frequency component of the reflected analog data determined by the terminal state is to be correctly compared with the initial-stage power.

The FFT module 14 transforms the digital data given as the time series data from the AFE 11 by the Fourier transform, generates frequency series digital data (hereinafter, referred to as the "reflected spectrum data"), and supplies it to the check part 31 of the terminal state determination unit 3. Thus, spectrum distribution shown by the reflected wave of the scanning analog data can be recognized.

The spectrum distribution state shown by the reflected spectrum data depends on the state of each terminal. For example, in Fig. 1, even when the same scanning analog data is outputted to the power line 10, the spectrum distribution state of the reflected wave is different between the case where the device A is connected to the outlet 51a and the case where it is not connected thereto. It is assumed that the correspondence relationship between the terminal state and the spectrum distribution of the reflected wave has been previously searched and registered in the pattern correspondence relationship storage part 32.

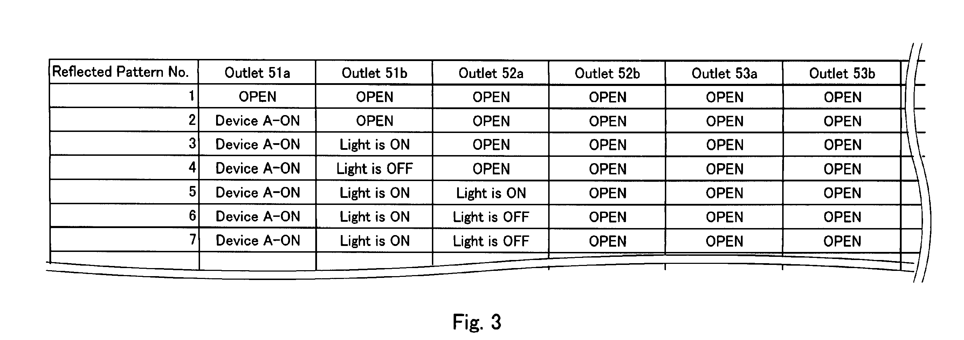

Here, regarding the received signal, it is focused on how much each of the scan frequencies (2, 5, 8, 11, 14, 17, 20, 23, 26, or 30 MHz in the above example) generated and superimposed on the transmission side has deteriorated since it was transmitted. Here, the pattern correspondence relationship storage part 32 stores relationship between combination of the states of the terminals and combination of attenuation rates of the respective scan frequencies. Fig. 3 shows one example.

A reflected pattern is provided by registering the combination of the attenuation rates of the respective carrier frequencies and has an allocated pattern number. Although many outlets exist in the house 1, it is supposed that a lighting outlet is only connected to a lighting device, and as for the other outlets, a certain outlet is only used for a certain device that the user intends to use. Therefore, the combinations of usage patterns of the outlets having no possibility of being used may be excluded, and the reflected pattern may be registered with respect to each combination among the remaining combinations. As a matter of course, the reflected patterns may be registered with respect to all possibilities.

A table shown in Fig. 3 is just a schematic image, and when the pattern is actually registered in the pattern correspondence relationship storage part 32, it can be recorded as several-bit information including a code to identify each outlet and information regarding the outlet state (the open state, connected device operating state, or connected device halting state).

When the check part 31 receives the reflected spectrum data from the FFT module 14, it recognizes the power of each scan frequency, calculates an attenuation rate from the initial-stage power, and checks this combination against the combinations of the attenuation rates (hereinafter, referred to as the "registered pattern data") registered in the pattern correspondence relationship storage part 32. Thus, when there is the data which completely coincides with each other, the terminal state shown by the registered pattern data is recognized as the terminal state at the present moment, and the result is outputted from the check result output part 33 to the outside.

In practice, it is difficult for the value of the attenuation rate of each scan frequency to perfectly coincide with the data without having any error, so that the corresponding terminal state is detected, allowing a certain error. In this case, the check part 31 employs a method in which probability of the state of each outlet is calculated, based on the attenuation rate of each scan frequency, the combination having the highest probability is detected as the terminal state, using a MEM (Maximum Entropy Method).

In addition, in a case where the information regarding all of the terminal states assumed by the user has not been registered in the pattern correspondence relationship storage part 32, the registered pattern data can be additionally stored through a learning process performed timely. In addition, as described above, in the case of the method to detect the state having the highest probability as the terminal state, when the value having the highest probability is below a predetermined value, the detection may be regarded as a failure and put into the learning process.

In the case where the check part 31 failed to retrieve the registered pattern data corresponding to the combination of the attenuation rates of the respective scan frequencies calculated from the reflected spectrum data, that fact is outputted from the check result output part 33. Then, the user inputs the state of the outlet at the present moment (the outlet 51a is open, the outlet 51b is connected to the device A, and the like) from the terminal state input reception part 35. When the terminal state input reception part 35 receives the state of the outlet, it outputs this information to the pattern correspondence relationship storage part 32. The pattern correspondence relationship storage part 32 relates the information regarding the terminal state sent this time, to the combination of the attenuation rates of the respective carrier frequencies detected this time, and newly stores the data as the registered pattern data.

Thus, the registered pattern data corresponding to the terminal state at the present moment has been registered, so that when the check is performed again under the same terminal state, it is highly likely that the terminal state can be correctly determined. Thus, every time the terminal state cannot be detected, the terminal state at that moment is inputted from the terminal state input reception part 35, and related to the reflected spectrum data applied just before and registered in the pattern correspondence relationship storage part 32, so that the registered pattern data can be additionally registered at appropriate timing.

In addition, while the information of the states regarding all of the outlets is inputted by the user in the above example, only the state regarding a part of the outlets may be inputted. For example, in a case where the outlet 51a is open when the check part 31 fails in detection and only that information may be registered, the pattern correspondence relationship storage part 32 cannot recognize the information of the other outlet, but it can relates the combination of the attenuation rates of the respective scan frequencies shown by the reflected spectrum data given from the check part 31 just before, to the terminal state in which "the outlet 51a is open".

In this case, when the check part 31 checks the data again, based on the attenuation rate of each scan frequency shown by the reflected spectrum data obtained by outputting the scanning bit stream data again, transmitting the scanning analog data to the power line 10, and transforming the reflected analog data by the A/D transform and the Fourier transform, it is more highly likely that at least the outlet 51a can be recognized as being "open". The state regarding the remaining outlets may be registered again from the terminal state input reception part 35. In this way, the state information regarding each outlet can be gradually registered.

In addition, in the above configuration, when the check part 31 fails to retrieve the registered pattern data, a series of processes in which the same scanning bit stream data is outputted, the scanning analog data is transmitted from the PLC adaptor 2, and the check part 31 retrieves again the registered pattern data based on the reflected spectrum data generated from the received reflected analog data may be repeated until the detection is successfully performed, or until the number of processes exceeds a predetermined number. In a case where the check part 31 fails in retrieval due to some sort of error, there is a possibility that the retrieval can be successfully made next time, and the terminal state can be determined at this time. Meanwhile, in a case where the check part 31 fails in retrieval even when the processes are repeated the predetermined number of times, it is supposed that the pattern data corresponding to the terminal state at the present moment is not registered, so that in this case, that fact may be outputted and an external input regarding the terminal state may be requested, as described above.

As described above, since the PLC adaptor 2 of the present invention is equipped with the terminal state determination unit 3, the state of each outlet can be automatically determined. In addition, even when it fails in determination, success probability in determination can be improved by repeating the determination and registration because it has a learning function.

By using the function of the present invention, the PLC adaptor 2 can remotely recognize the information about whether or not the device connected to the outlet is in operation at the present moment, so that in a case where the device which consumes a high power is in operation, the energy-saving consciousness of the user can be improved by being informed of that fact with emphasis. In addition, in a case where the device generates heat such as an iron or drier, safety can be ensured by informing the user of that fact.

Furthermore, the ON/OFF of the lighting device can be recognized by detecting the state of the outlet to which the lighting device is connected, so that by setting the PLC adaptor 2 having the above function in a house where an old person lives alone, the family can remotely monitor the information, and can feel relieved to see the person move in the house.

Hereinafter, other embodiments will be described.

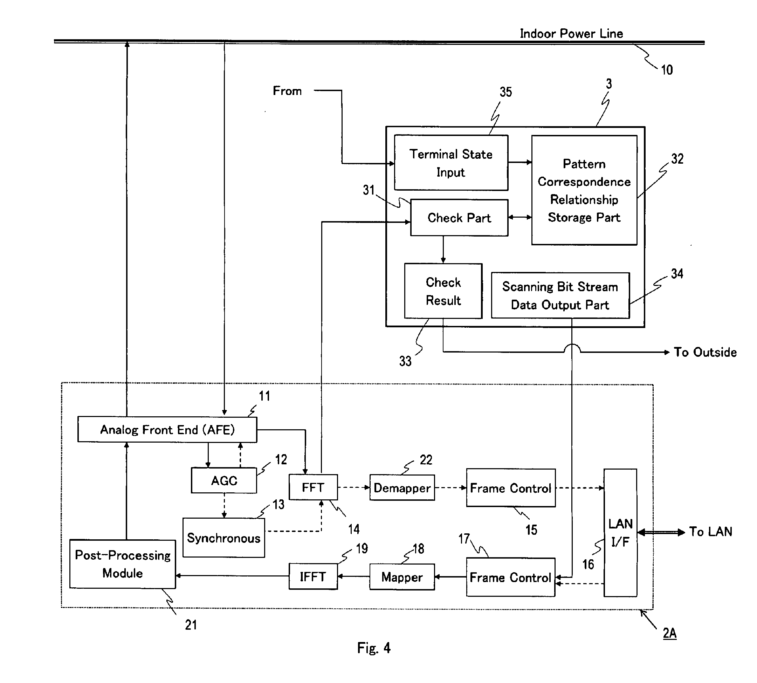

(1) While the terminal state determination unit (terminal state determination apparatus) 3 is provided in the PLC adaptor 2 in the configuration in Fig. 2, as another configuration, the terminal state determination unit 3 is provided outside the PLC adaptor 2 (provided in a general-purpose computer other than the PLC adaptor 2, for example) (refer to Fig. 4). Since the operation contents are the same as those in Fig. 2, their description is omitted. In addition, a PLC adaptor 2A in Fig. 4 corresponds to a conventional PLC adaptor not equipped with the terminal state determination unit 3.

(2) In the above embodiment, one PLC adaptor 2 is set, and the PLC adaptor 2 outputs the scanning analog data to the power line 10 and also detects the terminal state based on the reflected spectrum data obtained from the received reflected analog data. As another embodiment, the two PLC adaptors 2 may be separately provided and one adaptor (transmission adaptor) transmits the scanning analog data, and the other adaptor (reception adaptor) receives the reflected analog data to generate the reflected spectrum data and determine the terminal state based on the data. In this case, since characteristics of the reception signal changes based on a positional relationship between the reception PLC adaptor 2 and the transmission PLC adaptor 2, it is preferable that each adaptor is connected to a predetermined outlet.

Furthermore, in the case where the transmission PLC adaptor to transmit the scanning analog data and the reception PLC adaptor to receive the reflected analog data are separately provided, the transmission PLC adaptor may be equipped with the scanning bit stream data output part 34, and the reception PLC adaptor may be equipped with the check part 31, the pattern correspondence relationship storage part 32, the check result output part 33, and the terminal state input reception part 35. In this case, the number of the software blocks in each PLC adaptor can decrease.

In addition, in the case where the plurality of PLC adaptors are set, each PLC adaptor may generate the reflected spectrum data to make the determination, and determines the terminal state based on each determination result. In this case, determination precision can be improved.

(3) While it is assumed that the PLC adaptor 2 performs the digital modulation and demodulation processes according to the OFDM method in the above embodiment, the modulation method of the signal is not limited to the above method, and a spectrum spreading method (SS method) can be similarly used.

(4) In the above embodiment, the combination of the information shown by the power attenuation rates of the reflected spectrum data, based on the initial-stage power of each scan frequency is registered in the pattern correspondence relationship storage part 32 as the registered pattern data, so as to be related to the terminal state. As another embodiment, a value of the power of the reflected spectrum data of each scan frequency may be directly registered as the registered pattern data.

That is, by setting the initial-stage power of each scan frequency contained in the scanning bit stream data, to always the common value in determining the terminal state, when the value of the power itself of the reflected spectrum data can be detected, the terminal state can be detected by comparing the value of the power of the reflected spectrum data of each scan frequency detected in the check part 31 with the registered pattern data. This means that since the initial-stage power is always the same, the same result as the case where the attenuation rate is detected can be obtained by comparing the power values of the reflected spectrum data with the registered pattern data.

In light of this, even when the initial-stage power changes, the attenuation rate can be calculated by the check part 31 in determining the terminal state, as long as the information regarding the initial-stage power at the time of each determination has been recognized. That is, the initial-stage power can change, and by temporarily holding the information regarding the initial-stage power of each scan frequency when the scanning bit stream data is outputted from the scanning bit stream data output part 34, as soon as the check part 31 recognizes the power of each scan frequency of the received reflected spectrum data, it computes the attenuation rate of the scan frequency from the initial-stage power held thereby, and checks it against the data in the pattern correspondence relationship storage part 32. This embodiment can be useful in that even in a case the obtained reflected analog data is small in size and the power of each scan frequency cannot be recognized and cannot be checked even after the Fourier transform, it is supposed that the terminal state can be determined by increasing the initial-stage power, and generating the scanning bit stream data again to output it.

**Claims**

1. An indoor line terminal state determination apparatus to automatically determine whether an outlet set to connect an indoor power line to an electric device is in an open state or in a state connected to the device, comprising:

    a scanning bit stream data output part configured to output scanning bit stream data containing information regarding a plurality of scan frequencies and information regarding an initial-stage power of each of the scan frequencies;
    a pattern correspondence relationship storage part configured to store registered pattern data provided in such a manner that information regarding an attenuation rate of each of the scan frequencies or information capable of calculating the attenuation rate is related to a connection state of each outlet set on the indoor power line; and
    a check part configured to recognize a power of each of the scan frequencies from inputted frequency series reflected spectrum data, calculate the attenuation rate of each of the scanning frequencies from the initial-stage power, retrieve the registered pattern data having the same attenuation rate of each of the scanning frequencies or almost the same attenuation rate thereof within an error range, from the pattern correspondence relationship storage part, and output the connection state of the outlet related to the retrieved registered pattern data, as a check result when the retrieving can be successfully performed, wherein
    in a PLC adaptor, the scanning bit stream data is decomposed into data according to the number of the scan frequencies and transformed to time series digital data by inverse Fourier transform, the time series digital data is transformed to scanning analog data by D/A transform, and the scanning analog data is transmitted to the indoor power line, and
    in the same or different PLC adaptor, reflected analog data is received from the indoor power line and transformed to digital data by A/D transform and Fourier transform to generate the reflected spectrum data.

2. The indoor line terminal state determination apparatus according to claim 1, wherein
    the pattern correspondence relationship storage part stores the state of each outlet as probability information, based on combination of the attenuation rates of respective scan frequencies, and
    the check part checks the combination of the attenuation rates of the respective scan frequencies calculated from the reflected spectrum data against the information stored in the pattern correspondence relationship storage part, and outputs the state of the outlet having the highest probability information with respect to each outlet, as a checked result.

3. The indoor line terminal state determination apparatus according to claim 1, wherein
    when the check part cannot retrieve the registered pattern data determined to have the same attenuation rate of each of the scan frequencies or almost the same one within the error range, the check part outputs information requiring an input of information regarding the connection state of each outlet at the present moment.

4. The indoor line terminal state determination apparatus according to claim 2, wherein
    when there is an outlet about which the check part cannot retrieve the registered pattern data determined to have the same attenuation rate of each of the scan frequencies or almost the same one within the error range, the check part outputs information requiring an input of information regarding a connection state of the outlet.

5. The indoor line terminal state determination apparatus according to claim 3 or 4, comprising
    a terminal state input reception part configured to receive an external input of information regarding a connection state of an outlet, wherein
    the terminal state input reception part outputs the inputted information regarding connection states of one or more outlets to the pattern correspondence relationship storage part, and
    the pattern correspondence relationship storage part relates the combination of the attenuation rates of respective scan frequencies calculated by the check part just before, to the connection state of the outlet applied from the terminal state input reception part, and stores the relationship as the new registered pattern data.

6. A PLC adaptor comprising:

the indoor line terminal state determination apparatus according to any one of claims 1 to 5;
an encoder configured to decompose digital data containing information regarding frequencies and information regarding a power of each of the frequencies into signals of the respective frequencies;
an inverse Fourier transform module configured to superimpose the digital data of the respective frequencies generated by the encoder and transform the superimposed digital data to time series digital data;
an analog front end configured to transform the time series digital data to transformed analog data by D/A transform, transmit the transformed analog data to the indoor power line, and transform the analog data received from the indoor power line to transformed digital data by A/D transform; and
a Fourier transform module configured to transform the transformed time series digital data outputted from the analog front end to frequency series digital data, wherein
when the scanning bit stream data output part outputs the scanning bit stream data, the encoder decomposes the scanning bit stream data into the signals of the respective frequencies, the inverse Fourier transform module transforms the signals of the respective frequencies to the time series digital data, and the analog front end transforms the time series digital data to the scanning analog data and transmits the scanning analog data to the indoor power line, and after that,
when the analog front end receives the reflected analog data from the indoor power line and transforms the reflected analog data to digital data, the Fourier transform module transforms the digital data to the reflected spectrum data serving as the frequency series digital data and applies the reflected spectrum data to the check part, and the check part performs a checking process.

7. A method for determining an indoor line terminal state comprising:

connecting a plurality of the PLC adaptors according to claim 6 to the indoor power line;
transmitting the scanning analog data from one PLC adaptor; and receiving the reflected analog data by another PLC adaptor, generating the reflected spectrum data based on the reflected analog data, and performing a checking process in the check part.

Device A

51a

51b

52a

52b

Device B

53a

53b

PLC adaptor

2

50

1

Fig. 1

Fig. 2

| Reflected Pattern No. | Outlet 51a | Outlet 51b | Outlet 52a | Outlet 52b | Outlet 53a | Outlet 53b |
|---|---|---|---|---|---|---|
| 1 | OPEN | OPEN | OPEN | OPEN | OPEN | OPEN |
| 2 | Device A-ON | OPEN | OPEN | OPEN | OPEN | OPEN |
| 3 | Device A-ON | Light is ON | OPEN | OPEN | OPEN | OPEN |
| 4 | Device A-ON | Light is OFF | OPEN | OPEN | OPEN | OPEN |
| 5 | Device A-ON | Light is ON | Light is ON | OPEN | OPEN | OPEN |
| 6 | Device A-ON | Light is ON | Light is OFF | OPEN | OPEN | OPEN |
| 7 | Device A-ON | Light is ON | Light is OFF | OPEN | OPEN | OPEN |

Fig. 3

EP 2 393 213 A1

Fig. 4

| | Europäisches Patentamt European Patent Office Office européen des brevets | **EUROPEAN SEARCH REPORT** | Application Number EP 11 00 4447 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/167144 A1 (KOGA HISAO [JP] ET AL) 19 July 2007 (2007-07-19) * paragraphs [0006] - [0011] * ----- | 1-7 | INV. H04B3/54 |
| A | JP 2007 318229 A (TOYO NETWORKS & SYSTEM INTEGRA) 6 December 2007 (2007-12-06) * abstract * ----- | 1-7 | |
| | | | TECHNICAL FIELDS SEARCHED (IPC) H04B |

| | The present search report has been drawn up for all claims | | |
|---|---|---|---|
| Place of search The Hague | Date of completion of the search 9 August 2011 | Examiner De Iulis, M | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 00 4447

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2011

| Patent document cited in search report | | Publication date | Patent family member(s) | | Publication date |
|---|---|---|---|---|---|
| US 2007167144 | A1 | 19-07-2007 | EP 1980082 A2 | | 15-10-2008 |
| | | | JP 2007194929 A | | 02-08-2007 |
| | | | WO 2007083827 A2 | | 26-07-2007 |
| JP 2007318229 | A | 06-12-2007 | NONE | | |

EPO FORM P0459

For more details about this annex : see Official Journal of the European Patent Office, No. 12/82

**EP 2 393 213 A1**

**REFERENCES CITED IN THE DESCRIPTION**

**Patent documents cited in the description**

- JP 2007318229 A